Europäisches Patentamt

European Patent Office

Office européen des brevets

(11) Publication number: **0 282 027**
**A1**

# EUROPEAN PATENT APPLICATION

(21) Application number: 88103709.7

(22) Date of filing: 09.03.88

(51) Int. Cl.4: **C09C 1/02**

(30) Priority: 12.03.87 JP 57609/87

(43) Date of publication of application:
14.09.88 Bulletin 88/37

(84) Designated Contracting States:
DE FR GB IT

(71) Applicant: JAPAN M & C TRADING CO., LTD.
Bonfurimanbiru 4F 4-8, Shinbashi 3-chome
Minato-ku
Tokyo(JP)

(72) Inventor: Akazawa, Toyo
10-5, Kami-cho 1-chome
Ageo-shi Saitama-ken(JP)

(74) Representative: Vossius & Partner
Siebertstrasse 4 P.O. Box 86 07 67
D-8000 München 86(DE)

(54) Calcium carbonate powder.

(57) Calcium carbonate powder characterized in that at least 80% of the calcium carbonate particles contained in the powder have a sphericity of 0.4 or less. This calicium carbonate powder is prepared by subjecting calcium carbonate (2) to shear grinding (3). This calcium carbonate has excellent water retention almost equal to that of kaolin, a brightness superior to that of kaolin, as well as excellent white gloss, and, therefore, has high practical utility.

FIG. I

EP 0 282 027 A1

## CALCIUM CARBONATE POWDER

The present invention relates to calcium carbonate powder useful as a pigment for coating paper and having excellent coating properties and printability.

It is known that among pigments now commercially available kaolin having a hexagonal platelet crystalline structure exhibits excellent properties. It is in fact used in large quantities.

Recently, paper of high brightness in particular, high blueish brightness is preferred. However, paper coated with kaolin is shaded with yellow and the brightness thereof is not so high. The brightness of kaolin measured by means of a Hunter reflectometer (using a blue filter) is in the range of 85 to 90%. On the contrary, the brightness of calcium carbonate measured by the same reflectometer ranges from 90 to 95%. In this connection, calcium carbonate is known to have high brightness which is tinged with blue. However, the water retention thereof is lower than that of kaolin. Therefore, calcium carbonate is inadequate for use as a pigment for coating paper. It is also known that paper coated with calcium carbonate is inferior in luster to that coated with kaolin.

## SUMMARY OF THE INVENTION

An object of the present invention is to provide calcium carbonate powder having high water retention equal to or greater than that of kaolin and enabling provision of a coated paper having high luster than that coated with kaolin.

Accordingly, the present invention relates to calcium carbonate powder characterized in that at least 80% of the calcium carbonat particles contained in the powder have a sphericity of 0.4 or less.

## BRIEF DESCRIPTION OF THE DRAWING

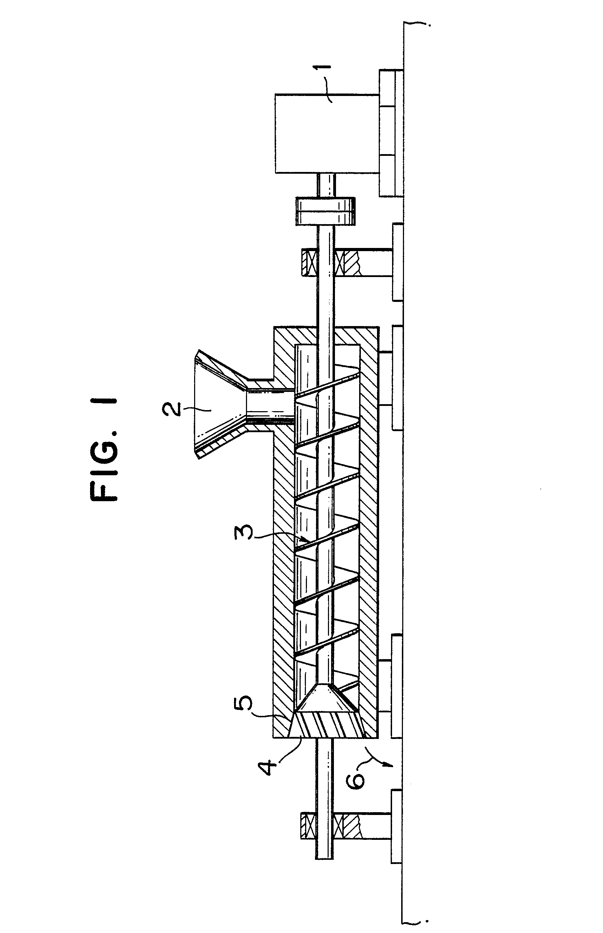

Fig. 1 is a schematic diagram of a screw grinding machine used to produce calcium carbonate powder according to the present invention.

## DESCRIPTION OF THE PREFERRED EMBODIMENT

The present invention will now be explained.

In the calcium carbonate powder according to the present invention, 80% or more, preferably 90 to 95% of the calcium carbonate particles contained therein have a sphericity of 0.4 or less, preferably of 0.01 to 0.3, more preferably of 0.1 to 0.3.

Method for Determining the Sphericity:

Sphericity is herein defined by the following equation and is determined and calculated in the following manner:

Sphericity (A) $= \overline{m} / \overline{m}'$

wherein m means the measured weight per particle of calcium carbonate, which is calculated from the number of particles contained in a prescribed weight of the powder sample, the number of particles being determined by means of a particle counter based on electric resistance measurement (Coulter principle) and m' means the weight of one particle determined from the volume-averaged diameter ($\overline{d}'$) corresponding to circumscribed rectangles of the particles.

(in which d′ is determined according to an image analysis system)

The calcium carbonate powder according to the present invention may be prepared by subjecting calcium carbonate, a starting materail, (hereinafter referred to "starting calcium carbonate") to be subsequently ground to shear grinding. Commercially available calcium carbonate may be used as the starting calcium carbonate.

The shear grinding is carried out by employing a grinding machine capable of shear rolling and crushing, shearing, and grinding of the materials to be ground. The grinding machine prefarably has grinding surfaces which are provided by a combination of at least two parts which are disk-shaped, conical, concave, convex, of a shape derived from these shapes or by a combination of one of these parts and a part having a spherical surface. The clearance between the grinding surfaces is prefarably not more than 1.0 mm. The material to be ground is fed between the grinding surfaces which apply a pressure of not less than 0.05 kg/cm² on the material. In this respect, the grinding machine is preferably of the type capable of continuously replacing the ground material with the non-ground material after the completion of the grinding operation.

The grinding machine is not restricted to any specific type so far as it satisfies the foregoing requirements and examples thereof include those of an impacting and pressing type such as a jaw crusher or an impact crusher; those of pressing and shearing type such as a roller mill; those of an autogenous grinding type (striking, pressing, rolling, and high speed rolling and impacting) such as an aerofall mill, a jet mill, a rotary cylinder mill, an attrition mill, a super-micron mill; those of using a grinding medium such as a ball mill, a rod mill, a sand mill, an oscilating ball mill, an attrition mill; combinations of these and other grinding machines of similar type thereof.

Examples of the grinding machine suitable to prepare the calcium carbonate powder of the present invention include a screw mill disclosed in Japanese Patent Application No.62-91346.

In the present invention, the foregoing shear grinding can be effected in either dry or wet manner. However, in either case the starting calcium carbonate should be supplied to the grinding machine so as to receive shearing stress.

To this end, the starting calcium carbonate is supplied in the form of powder having a desired bulk density (0.1 to 1.0, preferably 0.5 to 0.8) in the case where the grinding is carried out in the dry process. In order to impart such a bulk density to the starting calcium carbonate, it may be compressed according to need to reduce the volume thereof. On the other hand, in the case of the wet process, the starting calcium carbonate is supplied in the form of, for instance, a water slurry having a slurry concentration of not less than 50%, preferably 65 to 80%. In the latter case, it is possible to add 0.2% or more (with respect to the solid content to be ground), preferably 0.2 to 2.0%, of a dispersant (e.g., metal polyacrylate, metal polymethacrylate or sodium polyphosphate) to the slurry.

The calcium carbonate powder according to the present invention is useful as a pigment for coating paper as well as a paper filler.

Calcium carbonate according to the present invention has excellent water retention, almost equal to that of kaolin, and a brightness superior to that of kaolin. In addition, it has excellent white gloss and, therefore, has high practical utility.

The present invention will hereunder be explained in more detail with reference to the following working examples.


EXAMPLE 1

Limestone (3000 g) was ground under dry condition with a rotary impact grinding machine (NARA'S Model) to form coarse powder.

Then, the coarse powder was ground under wet condition in a portable sand mill. The wet grinding was effected for about 45 minutes so that 90% of the resulting powder had a particle size of not more than 2 microns. The sphericity of the calcium carbonate powder thus obtained was measured to be about 0.5.

Thereafter, the powdered calcium carbonate was subjected to shear grinding utilizing the screw grinding machine shown in Fig. 1.

The number of revolutions of a motor 1 was set to 21 RPM and the distance between surfaces 5 for shear grinding was fixed at 0.5 mm. The sample was supplied through a feed opening 2 to the grinding machine in order to effect grinding by means of a screw 3 extruding the calcium carbonate and a rotor 4 providing one of the grinding surfaces while monitoring the sphericity of the treated sample 6. Thus, there was obtained calcium carbonate powder according to the present invention having a sphericity of 0.4.

Then, calcium carbonate powder according to the present invention having a sphericity of 0.35 to 0.05 was obtained by gradually reducing the distance between the grinding surfaces 5 to 0.4 mm, 0.2 mm, 0.1 mm and 0.05 mm and adjusting the number of the revolutions of the motor 1.

Sphericity

After determining the weight of a prescribed amount of a sample of the powder, the number of particles contained in the sample was determined with a Coulter counter to estimate the average weight per particle. Moreover, three kinds of micrographs of the particles in the same sample were taken with a scanning electron microscope at a magnification of X 2,000 or more which permitted determination of the shapes of the individual particles and at an angle of inclination of 0°, 30° and 60°. The micrographs were processed using LUZEX-500 image information processing system in which the diameter of hypothetical spheres are deemed to be that of the circumscribed rectangular and the weight of standard spherical particles is calculated. Thus, the sphericity was estimated as the ratio between the average weight calculated from the result obtained by the measurement with the Coulter counter and the weight of the standard spherical particles.

EXAMPLE 2

20% (weight ratio: percentage of solid content) of the sample having the sphericity of 0.5 obtained in the course of EXAMPLE 1 was incorporated into the calcium carbonate of the present invention obtained in EXAMPLE 1 and then the mixture was sufficiently agitated and uniformly admixed.

Coated paper was prepared by coating, on the following base paper, a coating color having the following formulation obtained by using the mixed sample prepared above (this sample falls within the scope of this invention) under the following conditions.

Formulation of the Coating Color

| Component | Amount* |
|---|---|
| Mixed sample | 100 |
| NaOH | 0.1 |
| Dispersant | 0.45 |
| Lubricant | 1.0 |
| Antifoaming agent | 0.1 |
| Oxidized starch | 6.0 |
| SBR latex | 12.0 |
| Waterproofing agent | 0.45 |
| Color solid | 64(%) |

* Expressed as parts by weight of the reduced solid content.

4

Manufacturing Conditions of the Coated Paper Base paper    Form Paper
Coating    Helicoater; 600 m/min.
Drying    at 150°C for 30 sec.
Coated amount    13 g/m²
Calendering    Supercalender; 90 KG/cm²; 2 times at 50°C.

The water retention of the resultant coated paper was determined by a static ring cell technique and the white paper gloss was determined with a digital differential colorimeter. The results obtained are summarized in Table 1.

COMPARATIVE EXAMPLE 1

Commercially available kaolin (premium grade; manufactured and sold by Georgia Kaolin Co.), 80 to 95% of which had a particle size of 2 microns or less, was dissolved in water while agitating at 10,000 RPM with a high speed agitator and then the particles were classified into two groups, one of which had a particle size of more than 2 microns and the other of which had a particle size of not more than 2 microns.

A kaolin coated paper was prepared using the resultant kaolin particles having a particle size of not more than 2 microns, under the same conditions as in EXAMPLE 2. The water retention and the white paper gloss of the kaolin coated paper thus produced were determined according to the same procedures as in EXAMPLE 2. The results obtained are also summarized in Table 1.

COMPARATIVE EXAMPLE 2

The procedures of EXAMPLE 2 were repeated except that calcium carbonate having a sphericity of 0.5 which was obtained in the course of the processes of EXAMPLE 1 was used to form a coated paper, and the water retention and the white paper gloss of the resulting coated paper were determined. The results thus obtained are listed in Table 1.

Table 1

| | Sample | Sphericity | Water Retention (sec.) | Gloss of white Paper (%) |
|---|---|---|---|---|
| EXAMPLE | calcium carbonate | 0.05 | 70.1 | 79.0 |
| EXAMPLE | ditto | 0.10 | 70.0 | 78.6 |
| EXAMPLE | ditto | 0.15 | 69.7 | 77.0 |
| EXAMPLE | ditto | 0.20 | 69.0 | 75.1 |
| EXAMPLE | ditto | 0.25 | 67.1 | 73.0 |
| EXAMPLE | ditto | 0.30 | 66.4 | 72.5 |
| EXAMPLE | ditto | 0.35 | 64.0 | 70.0 |
| EXAMPLE | ditto | 0.40 | 61.0 | 66.1 |
| COMP. EXAMPLE | calcium carbonate (COMP.EX.2) | 0.50 | 54.8 | 59.5 |
| COMP. EXAMPLE | kaolin (COMP.EX.1) | -- | 68.0 | 70.5 |

## Claims

1. Calcium carbonate powder characterized in that at least 80% of the calcium carbonate particles contained in the powder have a sphericity of 0.4 or less.

2. Calcium carbonate powder according to claim 1 wherein at least 80% of the calcium carbonate particles have a sphericity ranging from 0.01 to 0.3.

3. Calcium carbonate powder according to claim 2 wherein 90 to 95% of the calcium carbonate particles have a sphericity ranging from 0.01 to 0.3.

4. A process for preparing calcium carbonate powder wherein at least 80% of the calcium carbonate particles have a sphericity of 0.4 or less, comprising subjecting calcium carbonate to shear grinding.

5. A process according to claim 4 wherein the shear grinding is conducted by employing a grinding machine capable of shear rolling and crushing, shearing, and grinding.

6. A process according to claim 5 wherein the machine has grinding surfaces which are provided by a combination of at least two parts which are disk-shaped, conical, concave, convex, of a shape derived from these shapes or by a combination of one of these parts and a part having a spherical surface.

7. A process according to claims 4 to 6 wherein the shear grinding is effected in dry or wet manner.

8. A process according to claims 4 to 7 wherein the shear grinding is effected in dry manner and the calcium carbonate used as a starting material is in the form of powder having a bulk density ranging from 0.1 to 1.0.

9. A process according to claims 4 to 7 wherein the shear grinding is effected in wet manner and the calcium carbonate used as a starting material is in the form of a water slurry.

10. A process according to claim 9 wherein the water slurry of calcium carbonate has a slurry concentration of 50% or less.

11. A process according to claim 9 or 10 wherein the water slurry contains a dispersant.

FIG. I

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | FR-A-2 493 858 (OMYA) ----- | | C 09 C 1/02 |

TECHNICAL FIELDS SEARCHED (Int. Cl.4)

C 09 C

The present search report has been drawn up for all claims

| Place of search | Date of completion of the search | Examiner |
|---|---|---|
| THE HAGUE | 30-05-1988 | VAN BELLINGEN I.C.A. |